# DEMANDE DE BREVET EUROPEEN

(11) **EP 0 717 531 A1**
(43) Date de publication de la demande: **19.06.1996**
(21) Numéro de dépôt: 95410142.4
(22) Date de dépôt: 13.12.1995
(51) Int. Cl.: H04L 12/413, H04L 12/28

(54) **Circuit de transmission de données sur le réseau électrique à faible seuil de réception**

(30) Priorité: 16.12.1994 FR 9415523
(71) Demandeur: SGS-THOMSON MICROELECTRONICS S.A., F-94250 Gentilly (FR)
(72) Inventeur: Huloux, Joel, F-38420 Le Versoud (FR)
(74) Mandataire: de Beaumont, Michel

(57) **Abrégé**

L'invention concerne un circuit de transmission de données sur le réseau électrique du type comportant un modulateur/démodulateur pourvu d'un circuit (1) délivrant un premier signal (CD) indicateur d'une occupation du réseau sur la base d'une comparaison entre le niveau d'un signal reçu (RAI) et une valeur seuil prédéterminée et des moyens pour commuter le modem dans un mode d'émission ou de réception, et qui comporte en outre un circuit numérique (10) délivrant un deuxième signal (CD') indicateur d'une occupation du réseau sur la base d'une identification d'une séquence de données prédéterminée présente dans chaque trame de transmission avant un message de données et des moyens (5, 6, 8) pour autoriser une commutation du modem vers son mode d'émission lorsque lesdits signaux d'occupation (CD, CD') indiquent une absence de transmission.

## Description

La présente invention concerne le domaine des modulateurs/démodulateurs (modems) numériques utilisant le réseau électrique comme support de transmission. L'invention s'applique plus particulièrement à la détection de la présence d'une transmission par les différents modems raccordés sur un même réseau.

Les modems utilisant le réseau électrique comme support de transmission sont notamment utilisés pour des applications de domotique. Dans de telles applications, différents appareils électriques (chauffage, éclairage, alarme, etc.) raccordés au réseau sont associés à des modems et sont ainsi susceptibles d'être commandés par une centrale de commande selon un scénario temporel et/ou faisant intervenir des capteurs (température, incendie, inondation, effraction, etc.). La centrale est généralement associée à un système de réception d'instructions transmises par le réseau téléphonique pour permettre une commande ou une programmation de scénarios à distance de l'installation domotique.

Dans une telle installation, le réseau électrique à 50 ou 60 Hz constitue le support de transmission. Les données à transmettre sont codées sous forme binaire puis converties en signal analogique sous forme d'échantillons de portions de l'une ou l'autre de deux fréquences qui constituent le signal à transmettre sur le réseau. On utilise généralement une modulation par saut de fréquence (couramment appelée modulation FSK d'après l'expression anglo-saxonne Frequency Shift Keying). Les fréquences des porteuses de la modulation FSK sont choisies pour être importantes (par exemple entre environ 95 et 148,5 kHz) devant la fréquence de distribution de l'électricité (50 ou 60 Hz). L'amplitude de la modulation est faible (de l'ordre du volt) devant la tension du réseau électrique afin de ne pas nuire à l'alimentation des différents appareils.

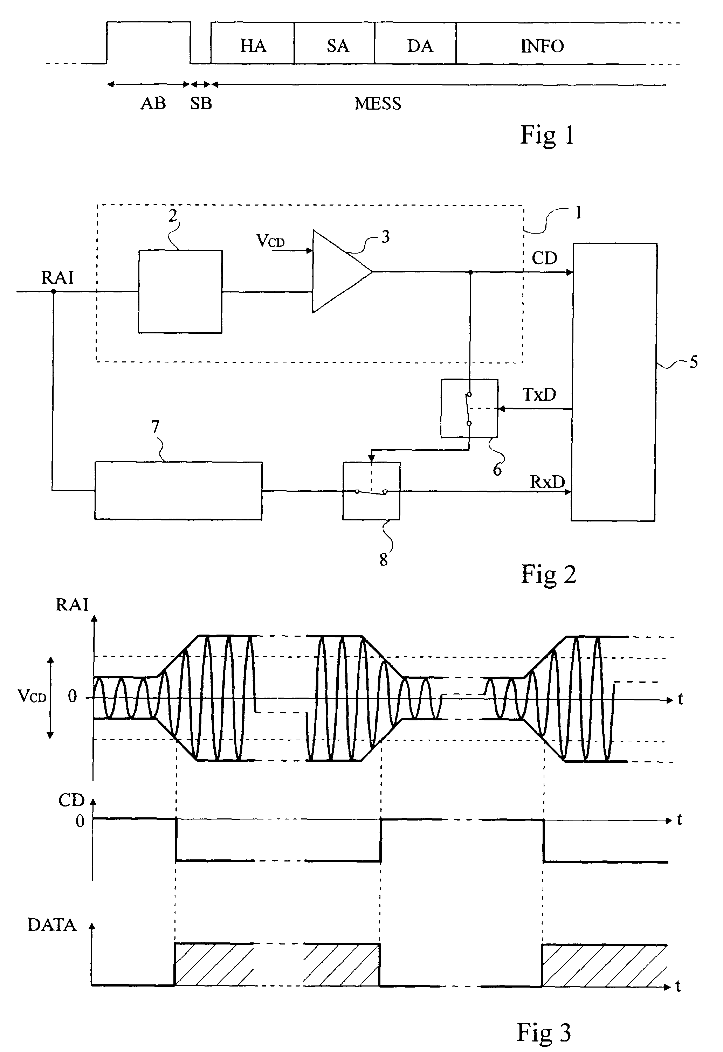

La figure 1 représente un exemple de trame selon laquelle sont généralement codées les informations transmises par la centrale ou par un appareil.

La trame débute par une séquence de calage AB des filtres utilisés pour la démodulation des données. Cette séquence est par exemple constituée d'une émission de bits à 1 pendant une durée (par exemple de 4 ms) qui est fonction de la constante de temps des filtres du modem. La séquence AB est suivie d'un bit de départ SB indicateur du début du message de données pseudo-aléatoire.

Ce message MESS comprend une adresse de l'installation domotique HA qui est identique pour tous les éléments de l'installation concernée. Cette adresse permet d'éviter que des messages INFO provenant d'une autre installation, par exemple une maison voisine, ne viennent perturber le fonctionnement de l'installation concernée.

Vient ensuite, l'adresse SA de l'émetteur du message. Chaque appareil possède une adresse qui permet à la centrale d'identifier la provenance des informations qu'elle reçoit et à un appareil donné de déterminer s'il est le destinataire d'une instruction ou d'une information INFO transmise sur le réseau.

La trame comporte ensuite une adresse de destination DA qui correspond à l'adresse de l'appareil auquel est destinée l'information circulant sur le réseau.

La trame se termine par les informations INFO proprement dites. Il peut s'agir, par exemple, d'une instruction de commande d'un appareil électrique (éclairage, chauffage, volet roulant, etc.), d'une mesure fournie par un capteur (température, incendie, etc.) ou d'une réponse fournie par un appareil donné suite à une commande de la centrale.

Tous les modems de l'installation scrutent en permanence le réseau pour déterminer si une transmission est présente. En d'autres termes, tous les modems scrutent en permanence le réseau pour déterminer l'état libre ou occupé du réseau.

Pour ce faire, on utilise au sein de chaque modem un circuit de détection de la présence d'un signal de modulation caractérisé par la présence d'une porteuse de la modulation FSK et qui indique une occupation du réseau.

Lorsqu'une porteuse est détectée par un modem donné, il est placé dans un mode de réception où il examine le contenu du message transmis pour déterminer s'il lui est adressé.

Comme tous les appareils utilisent le même support de transmission, chaque appareil devant émettre des données doit au préalable s'assurer que le réseau est libre, c'est-à-dire qu'aucun autre appareil ou même la centrale n'est en train d'émettre des informations.

Ainsi, si aucune transmission n'est détectée au moyen (du circuit de détection, le modem peut commuter en mode émission pour transmettre des informations à la centrale, voire même à d'autres appareils.

La figure 2 représente un exemple de circuit classique de détection d'une transmission. Ce circuit se retrouve dans tous les modems des appareils de l'installation.

La détection de la présence d'une transmission qui se caractérise par la présence d'un signal de modulation en FSK s'effectue sur la base de l'énergie du signal reçu par le modem. Le signal de modulation RAI est extrait du réseau au moyen d'une interface non représentée et chargée d'éliminer la composante haute-tension et basse-fréquence qui correspond à la porteuse fournie par l'alimentation électrique. Lorsqu'une transmission est présente sur le réseau, le signal RAI est un signal analogique en modulation FSK. Le signal RAI reçu par un modem est envoyé sur le circuit de détection 1. Le circuit 1 comprend un intégrateur 2 pour déterminer l'énergie du signal RAI et un comparateur 3. Le niveau d'énergie du signal RAI est envoyé sur une première entrée du comparateur 3 dont une deuxième entrée reçoit une valeur seuil V_{CD}. La sortie du comparateur 3 délivre un signal CD à deux états, respectivement bas et haut, indicateurs de la présence ou de l'absence d'une transmission.

Le signal CD est alors envoyé vers un circuit numérique 5, ou processeur, chargé de commander le modem et l'appareil auquel il est destiné en fonction des informations reçues. Ce circuit sert, entre autres, à commuter le modem en mode de réception ou d'émission. Cette commutation s'effectue, au sein du modem, selon l'état pris par un signal délivré par le circuit 5. Un signal TxD est utilisé à la fois pour commander le modulateur (non représenté) du modem et pour commander un interrupteur 6, ou porte, qui rend actif ou non le blocage des données RxD, issues d'un démodulateur 7, par le signal CD au moyen d'un interrupteur 8.

Un problème que l'on rencontre dans ce type de transmission est lié à l'utilisation du réseau électrique comme support de transmission. En effet, des appareils électriques susceptibles d'être branchés sur le réseau engendrent lors de leur fonctionnement ou lors de leur commutation du bruit sur le réseau. La principale source de bruit est constituée par les triacs utilisés dans les variateurs de lumière, par exemple des lampes halogènes. Ces triacs génèrent du bruit qui est synchrone avec le signal d'alimentation et ce bruit correspond à des harmoniques de la fréquence du réseau (50 ou 60 Hz). De plus, ces lumières sont allumées pendant des périodes assez longues. Du bruit peut également provenir par exemple d'alimentations à découpage ou de moteurs. Tous ces bruits sont susceptibles d'interférer avec les données transmises et d'induire des erreurs dans l'interprétation des données.

Pour limiter l'influence du bruit sur les données transmises, on est contraint à fixer un seuil V_{CD} important. Ce niveau est par exemple de 5 mV alors que le niveau minima de fonctionnement du démodulateur est par exemple de 0,4 mV. Une telle valeur de seuil entraîne une diminution de la plage de fonctionnement du modem d'environ 23 dB.

Une telle solution serait acceptable si le signal reçu par un modem donné ne risquait pas d'être fortement atténué en raison du support de transmission utilisé. Cette atténuation qui est variable et incontrôlable a essentiellement deux causes.

En premier lieu, l'impédance du réseau aux fréquences utilisées pour la modulation varie en fonction des charges qu'il alimente. Cette variation d'impédance qui est essentiellement inductive et par exemple comprise entre 1,5 et 80 Ω à la fréquence de 100 kHz est incontrôlable car elle dépend des charges alimentées dans l'installation concernée et de l'impédance du transformateur de distribution d'électricité sur lequel l'installation est raccordée. De plus, l'impédance du réseau dépend des charges alimentées dans toutes les installations qu'il alimente. L'atténuation due à ces variations d'impédance est par exemple comprise entre environ 2 et 40 dB pour une charge typiquement résistive.

En second lieu, les connexions électriques atténuent le signal. L'atténuation est plus importante si le signal émis par un modem donné est destiné à un modem raccordé à une autre branche du circuit électrique. En d'autres termes, la traversée du tableau de répartition et des fusibles ou disjoncteurs qu'il comporte entraîne une atténuation importante du signal (de l'ordre de 20 à 30 dB).

La figure 3 illustre la conséquence des inconvénients décrits ci-dessus sur le fonctionnement du circuit représenté à la figure 2. Cette figure 3 représente la forme du signal CD et du signal RxD délivré par le démodulateur 7 en fonction d'un exemple de signal de modulation FSK RAI qui se trouve atténué pendant certaines périodes sous l'effet, par exemple, de variations de l'impédance du réseau.

Comme on peut le constater, les données reçues ne sont considérées comme valides et ne sont donc démodulées que lorsque le niveau du signal RAI est supérieur à la valeur seuil V_{CD}. Or, la valeur élevée de la tension seuil V_{CD} du circuit 1 conduit à des pertes d'informations fréquentes en raison de l'atténuation du signal transmis.

De plus, si l'atténuation du signal RAI d'un modem donné est à un niveau inférieur au seuil V_{CD} (figure 3), ce modem considèrera qu'aucune transmission n'est présente et risque d'émettre des informations alors que le réseau est occupé.

En pratique, le circuit de détection 1, le modulateur (non représenté), le démodulateur 7 et les interrupteurs 6 et 8 sont intégrés au sein d'un même circuit comprenant tous les sous-ensembles du modem et notamment, les différents filtres nécessaires à la réception ou à l'émission de données. Un exemple d'un tel circuit est connu sous la dénomination commerciale ST7537.

L'invention vise à pallier les inconvénients des circuits classiques de transmissions de données sur le réseau électrique en proposant un circuit qui permette d'identifier l'occupation du réseau de manière sûre tout en autorisant la réception de données fortement atténuées.

Pour atteindre ces objets, la présente invention prévoit un circuit de transmission de données binaires sur le réseau électrique du type comportant un modulateur/démodulateur pourvu d'un circuit délivrant un premier signal indicateur d'une occupation du réseau sur la base d'une comparaison entre le niveau d'un signal de modulation reçu et une valeur seuil prédéterminée et des moyens pour commuter le modem dans un mode d'émission ou de réception, et qui comporte en outre un circuit numérique délivrant un deuxième signal indicateur d'une occupation du réseau sur la base d'une identification d'une séquence de données prédéterminée présente dans chaque trame de transmission avant un message de données et des moyens pour autoriser une commutation du modem vers son mode d'émission lorsque lesdits signaux d'occupation indiquent une absence de transmission.

Selon un mode de réalisation de l'invention, ledit circuit d'identification comporte un comparateur numérique dont une première entrée est reliée à une sortie du démodulateur, dont une seconde entrée reçoit un modèle de ladite séquence prédéterminée stocké dans une mémoire et dont une sortie délivre ledit deuxième signal indicateur d'une occupation du réseau.

Selon un mode de réalisation de l'invention, ledit circuit d'identification comporte en outre un registre à décalage entre la sortie dudit démodulateur et ladite première entrée du comparateur numérique, le comparateur et ledit registre étant commandés par un signal d'horloge correspondant à l'horloge des données reçues.

Selon un mode de réalisation de l'invention, ladite séquence prédéterminée est choisie pour présenter une faible probabilité d'apparition aléatoire.

Selon un mode de réalisation de l'invention, les données binaires à transmettre sont modulées par saut de fréquence et en ce que les deux porteuses de la modulation sont comprises entre 95 et 148,5 kHz.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
les figures 1 à 3 qui ont été décrites précédemment sont destinées à exposer l'état de la technique et le problème posé ;
la figure 4 représente un mode de réalisation d'un circuit d'identification d'une transmission selon l'invention ;
la figure 5 représente un exemple de trame de transmission selon l'invention ; et
la figure 6 représente un mode de réalisation d'un circuit de transmission de données selon l'invention.

Pour des raisons de clarté, seuls les éléments utiles à la compréhension de l'invention ont été représentés aux figures. En particulier, les détails constitutifs et les différents filtres du modem n'ont pas été représentés. De plus, les mêmes éléments ont été désignés aux différentes figures par les mêmes références.

Pour optimiser la détection de l'état libre ou occupé du réseau par les différents modems qui y sont raccordés, l'invention propose d'associer à la détection classique basée sur l'énergie du signal reçu, une détection de la présence d'une transmission qui est basée sur l'identification d'une séquence prédéterminée de données.

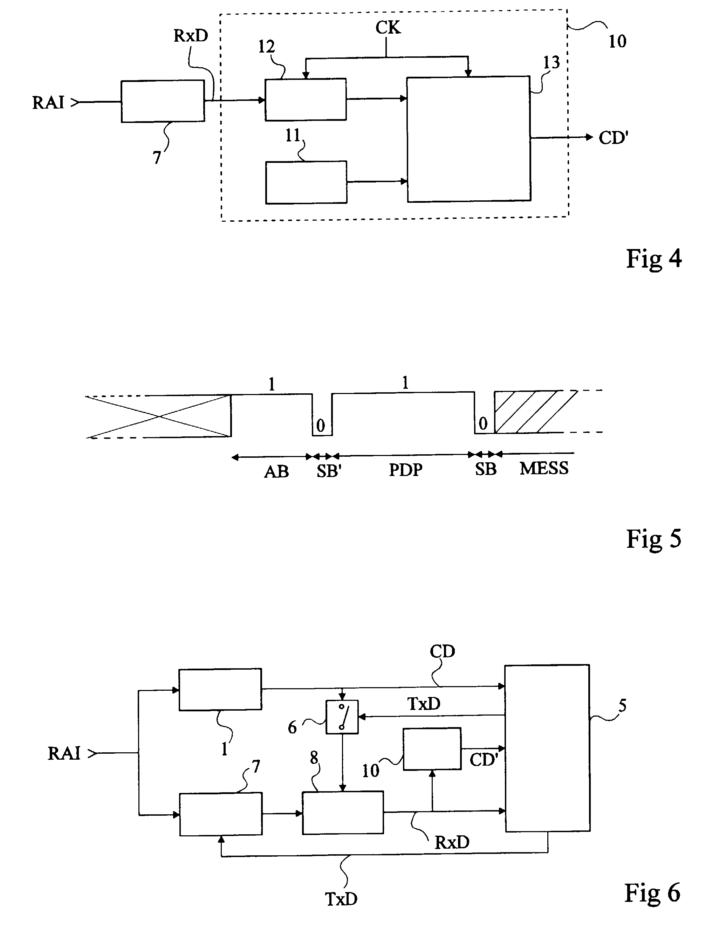

La figure 4 représente un mode de réalisation d'un tel circuit de détection basé sur l'identification d'une séquence prédéterminée de données selon l'invention.

Ce circuit 10 comporte une mémoire 11 dans laquelle est stockée un modèle d'une séquence de bits prédéterminée. Le signal de modulation RAI est envoyé sur le démodulateur FSK 7 du modem chargé de restituer le signal RxD de données binaires. Le signal RxD est envoyé sur un registre à décalage 12. La sortie de ce registre est reliée à une première entrée d'un comparateur numérique 13 dont une deuxième entrée reçoit les bits mémorisés dans la mémoire 11. Le comparateur 13 et le registre 12 sont commandés par un signal d'horloge CK qui correspond à l'horloge de réception des données démodulées.

La sortie du comparateur 13 fournit un signal CD' à deux états, indicateur de l'identification de la présence d'une transmission sur le réseau. L'identification s'effectue ici par un examen de cohérence entre les données démodulées et la séquence prédéterminée.

Ainsi, même si le niveau du signal reçu est fortement atténué, le détecteur 10 selon l'invention est capable d'identifier la présence d'une transmission sur le réseau. La limite de fonctionnement du détecteur selon l'invention est désormais liée à la sensibilité du démodulateur FSK, soit par exemple 0,4 mV.

Par contre, le fonctionnement du détecteur selon l'invention impose que toutes les trames émises par les différents modems comportent la même séquence prédéterminée de données.

Cette séquence est selon l'invention choisie pour avoir une faible probabilité de se retrouver dans un signal aléatoire. Ainsi, la présence de bruit sur le réseau ne risque pas d'être interprétée comme une transmission.

La figure 5 représente la structure d'une trame de signaux émis dans le cadre d'un protocole de transmission de données sur un réseau électrique selon l'invention.

La distinction par rapport aux trames classiques est que l'on intercale entre la séquence de calage AB et le bit de départ SB, une séquence prédéterminée de bits PDP permettant aux modems récepteurs d'identifier de manière sûre la présence d'une transmission.

Cette séquence PDP correspond au modèle mémorisé dans les mémoires 11 de tous les modems de l'installation.

Le nombre et la valeur des bits constitutifs de cette séquence sont choisis pour qu'elle ne puisse apparaître sous l'effet de bruit sur le réseau. Par contre, il n'est pas nécessaire que cette séquence ne puisse correspondre au contenu de la séquence de données pseudo-aléatoire constitutive du message MESS. En effet, une fois que le modem détecte la présence d'une transmission de données cohérentes au moyen de la séquence PDP, peu importe qu'une suite de bits identique apparaisse dans les données qui suivent.

En présence de bruit entraînant l'apparition de bits aléatoires entre deux transmissions de données, tous les modems considéreront le réseau comme libre dans la mesure où ils n'identifieront pas la séquence prédéterminée.

A titre d'exemple, on pourra choisir comme séquence PDP, une suite de 1 d'une durée telle qu'il est très improbable qu'elle apparaisse de manière aléatoire sous l'effet de bruit. Dans ce cas, la séquence PDP sera de préférence précédée d'un bit de départ SB' à 0. Si les fréquences utilisées pour la modulation FSK sont de l'ordre d'une centaine de kHz, on choisira par exemple une durée de 7 ms, soit 7 bits consécutifs pour la séquence PDP.

La fin d'une transmission peut être identifiée au moyen d'une séquence terminale prédéterminée (non représentée) dont un modèle est mémorisé dans chaque modem comme pour la séquence PDP. L'apparition de cette séquence terminale permet de replacer les modems dans un mode où ils surveillent la réception d'une nouvelle séquence PDP.

Le fin d'une transmission peut également être effectuée de manière temporelle dans la mesure où la longueur du message MESS est généralement indiquée dans la trame transmise par un modem donnée.

La figure 6 représente un mode de réalisation d'un circuit de transmission selon l'invention appliqué sur une adaptation d'un modem existant. Il peut s'agir par exemple d'un modem connu sous la désignation commerciale ST7537.

Dans un tel modem, une détection de la présence d'une transmission basée sur le niveau d'énergie du signal reçu est intégrée avec les fonctions de modulation et de démodulation. La sortie du démodulateur 7 qui délivre classiquement, par l'intermédiaire d'un interrupteur 8 commandé par un signal CD, les données RxD au circuit numérique de commande 5 est également envoyée sur le registre à décalage 12 d'un circuit de détection 10 tel que représenté à la figure 4. Les sorties respectives CD et CD' des circuits de détection 1 et 10 sont chacune reliées à une entrée du circuit 5.

La logique de décision du circuit 5 est établie pour forcer le signal TxD dans un état où il ferme l'interrupteur 6 indépendamment de l'état du signal CD hors des périodes où ce dernier indique la présence d'une transmission. En d'autres termes, l'interrupteur 6 est selon l'invention ouvert, uniquement pendant les périodes d'émission du modem qui n'interviennent que si les deux circuits 1 et 10 ont détecté une absence de transmission.

Un avantage d'une association des deux détecteurs est qu'elle évite qu'un modem n'entame une émission de données si un bruit important dans la bande utile est présent sur le réseau. On limite ainsi les risques d'erreurs dans la transmission en faisant débuter chaque transmission à un moment où le réseau est dans une situation optimale.

Bien entendu, la présente invention est susceptible de diverses variantes et modifications qui apparaîtront à l'homme de l'art. En particulier, chacun des composants décrits pourra être remplacé par un ou plusieurs éléments remplissant la même fonction.

De plus, l'invention s'applique quel que soit le type de modulation utilisée et quel que soit le type de données numériques et la structure du message à transmettre.

De plus, alors que certaines des explications précédentes ont été données par souci de clarté en utilisant un vocabulaire qui correspond parfois à un fonctionnement analogique, il sera clair pour l'homme du métier que tous les éléments du circuit de détection selon la présente invention traitent des signaux numériques et que les constituants du circuit illustrés sous forme matérielle pourront correspondre en pratique à des réalisations logicielles.

## Revendications

1. Circuit de transmission de données binaires sur le réseau électrique du type comportant un modulateur/démodulateur pourvu d'un circuit (1) délivrant un premier signal (CD) indicateur d'une occupation du réseau sur la base d'une comparaison entre le niveau d'un signal de modulation reçu (RAI) et une valeur seuil prédéterminée (V_{CD}) et des moyens pour commuter le modem dans un mode d'émission ou de réception, caractérisé en ce qu'il comporte en outre un circuit numérique (10) délivrant un deuxième signal (CD') indicateur d'une occupation du réseau sur la base d'une identification d'une séquence de données prédéterminée (PDP) présente dans chaque trame de transmission avant un message de données (MESS) et des moyens (5, 6, 8) pour autoriser une commutation du modem vers son mode d'émission lorsque lesdits signaux d'occupation (CD, CD') indiquent une absence de transmission.

2. Circuit de transmission selon la revendication 1, caractérisé en ce que ledit circuit d'identification (10) comporte un comparateur numérique (13) dont une première entrée est reliée à une sortie du démodulateur (7), dont une seconde entrée reçoit un modèle de ladite séquence prédéterminée (PDP) stocké dans une mémoire (11) et dont une sortie délivre ledit deuxième signal (CD') indicateur d'une occupation du réseau.

3. Circuit de transmission selon la revendication 2, caractérisé en ce que ledit circuit d'identification (10) comporte en outre un registre à décalage (12) entre la sortie dudit démodulateur (7) et ladite première entrée du comparateur numérique (13), le comparateur et ledit registre étant commandés par un signal d'horloge (CK) correspondant à l'horloge des données reçues.

4. Circuit de transmission selon l'une quelconque des revendications 1 à 3, caractérisé en ce que ladite séquence prédéterminée (PDP) est choisie pour présenter une faible probabilité d'apparition aléatoire.

5. Circuit de transmission selon l'une quelconque des revendications 1 à 4, caractérisé en ce que les données binaires à transmettre sont modulées par saut de fréquence et en ce que les deux porteuses de la modulation sont comprises entre 95 et 148,5 kHz.
